# EUROPÄISCHE PATENTSCHRIFT

(11) **EP 0 594 797 B1**
(45) Veröffentlichungstag und Bekanntmachung des Hinweises auf die Patenterteilung: **13.11.1996**
(21) Anmeldenummer: 93902244.8
(22) Anmeldetag: 23.01.1993
(51) Int. Cl.: G01S 13/87

(54) **VERFAHREN ZUR ÜBERWACHUNG EINES GEBIETES**
PROCESS FOR MONITORING A ZONE
PROCEDE POUR LA SURVEILLANCE D'UNE ZONE

(30) Priorität: 18.05.1992 DE 4216391
(43) Veröffentlichungstag der Anmeldung: 04.05.1994
(73) Patentinhaber: Daimler-Benz Aerospace Aktiengesellschaft, 81663 München (DE)
(72) Erfinder: SIEPRATH, Werner, D-7910 Neu-Ulm (DE); ROBINSON, David, D-7900 Ulm-Böfingen (DE)
(74) Vertreter: Fröhling, Werner Otto, Dr.
(86) Internationale Anmeldenummer: EP9300154
(87) Internationale Veröffentlichungsnummer: WO9323768

(56) Entgegenhaltungen:
- EP-A- 0 335 558
- EP-A- 0 466 239
- GB-A- 2 165 414

## Beschreibung

Die Erfindung betrifft ein Verfahren zur Überwachung eines Gebietes nach dem Oberbegriff des Patentanspruchs 1. Ein solches Verfahren ist aus der GB-A-2 165 414 bekannt.

Die Erfindung betrifft insbesondere die Überwachng eines Gebietes, auf dem mindestens ein nichtkooperatives (Radar-)Ziel vorhanden ist. Ei solches Ziel besitzt keinen sogenannten Transponder una/oder keine Navigationsanlage, deren Navigationsergebnis durch eine ortsfeste (Radar-)Sende-/Empfangsanlage abfragbar ist.

Ein solches Gebiet kann z.B. ein sogenannter Regionalflugplatz sein, auf dem nach Sichtflugregeln abgefertigt wird. Das Gebiet kann z. B. auch ein zu einem Großflughafen gehörendes Vorfeld sein, auf dem z. B. neben den ruhenden oder bewegten Flugzeugen auch ruhende oder bewegte Fahrzeuge, z. B. Zubringerbusse und/oder Versorgungsfahrzeuge, überwacht werden müssen. Weiterhin kann das Gebiet z. B. auch ein Schiffahrtsweg, z. B. ein Fluß und/oder ein Kanal oder eine Hafenanlage sein.

Auf solchen Gebieten sind sehr unterschiedliche Arten von (Radar-)Zielen vorhanden, die möglichst genau geortet und klassifiziert werden müssen.

Es ist nun naheliegend, ein solches Gebiet mit Hilfe einer einzigen leistungsstarken Radaranlage zu überwachen. Ein solches Verfahren hat insbesondere bei einer ungünstigen Topographie des zu überwachenden Gebietes den Nachteil, daß sogenannte Abschattungen auftreten können, in denen keine zuverlässige Überwachung möglich ist.

Der Erfindung liegt daher die Aufgabe zugrunde, ein gattungsgemäßes Verfahren anzugeben, das eine lückenlose, verzugsarme, genaue und möglichst zielortunabhängige Ortung, Klassifikation und Verfolgung von stationären und/oder bewegten Objekten (Zielen) in dem zu überwachenden Gebiet ermöglicht. Der Erfindung liegt außerdem die Aufgabe zugrunde, ein kostengünstig und zuverlässig arbeitendes Verfahren anzugeben.

Diese Aufgabe wird gelöst durch die im kennzeichnenden Teil des Patentanspruchs 1 angegebenen Merkmale. Vorteilhafte Ausgestaltungen und/oder Weiterbildungen sind den Unteransprüchen entnehmbar.

Ein erster Vorteil der Erfindung besteht darin, daß in einem zu überwachenden Gebiet eine gleichförmig genaue und leistungsgesteigerte Ortung und Klassifikation mit einem Verbund hochauflösender, kostengünstiger und räumlich kleiner Radarsensoren beschränkter Reichweite möglich wird.

Ein zweiter Vorteil besteht darin, daß eine an das zu überwachende Gebiet (Gelände) angepaßte Aufstellung der Radaranlagen und/oder Radarsensoren möglich wird und damit eine lückenlose und abschattungsfreie Überwachung.

Ein dritter Vorteil besteht darin, daß für Radaranlagen (Radarsensoren) reichweitenbeschränkte Halbleitersender, die kostengünstig sind, verwendet werden können.

Ein vierter Vorteil besteht darin, daß das zu überwachende Gebiet in kleine Flächen, vorzugsweise aneinandergrenzende Dreiecke, aufgeteilt wird. Dadurch ist einerseits eine kostengünstige Erweiterung des zu überwachenden Gebietes möglich und andererseits noch eine genügende Überwachung, sofern eine der Radaranlagen (Radarsensoren) infolge eines Defektes oder Wartungsarbeiten ausfällt.

Weitere Vorteile sind der folgenden Beschreibung entnehmbar.

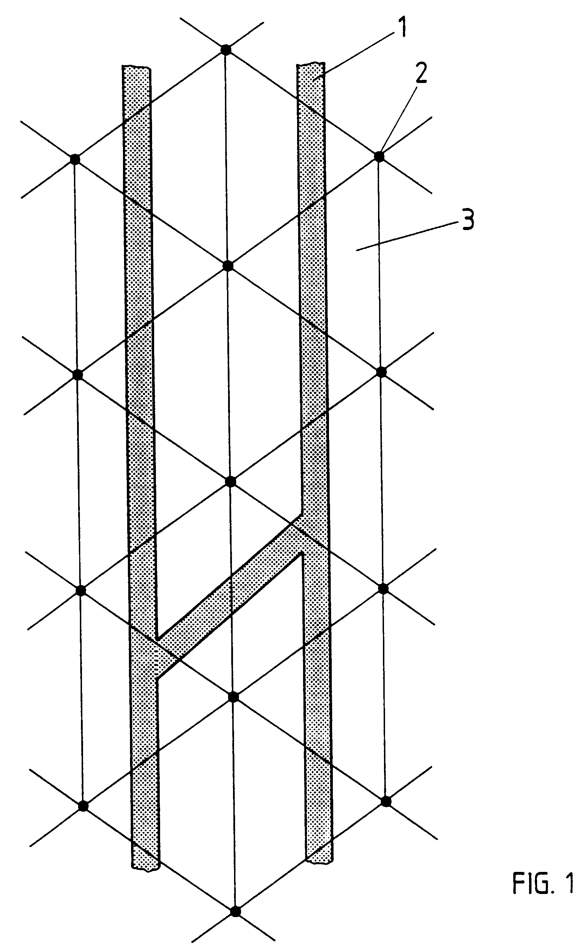

Die Erfindung wird im folgenden anhand von Ausführungsbeispielen unter Bezugnahme auf schematisch dargestellte Figuren näher erläutert. Die Figuren 1 bis 4 zeigen schemtisch dargestellte Diagramme zur Erläuterung der Erfindung.

In FIG. 1 ist das zu überwachende Gebiet 1 in Form zweier parallel verlaufender Streifen, die mit einem grauen Punktraster unterlegt sind, dargestellt. Die parallelen Streifen sind außerdem durch einem schräg verlaufenden Streifen verbunden. Eine solche Darstellung kann z. B. einem Teilbereich eines Flughafens entsprechen, beispielsweise einem zu überwachenden Start- und/oder Landebahnenabschnitt oder Rollbahnen auf dem sogenannten Vorfeld. Die Darstellung kann aber auch einem zu überwachenden Kanal- oder Autostraßensystem entsprechen, das in einem topographisch unübersichtlichen Gelände liegt. Beispielsweise kann die Darstellung einem Kanal- oder Autostraßensystem entsprechen, zwischen dem ein hügeliges Gelände und/oder eine dichte Bebauung liegt.

Ein solches zu überwachendes Gebiet wird nun in der dargestellten Weise mit einem Punktraster (große schwarze Punkte) überzogen. Diese Punkte 2 haben in Abhängigkeit von der vorhandenen Topographie einen Abstand, der in einem Bereich von vorzugsweise 0,3 km bis 3 km liegt. Die Punkte 2 sind aus Gründen des besseren Verständnisses mit Linien verbunden, so daß lückenlos aneinandergrenzende vieleckige Flächen 3 entstehen, die auch Zellen genannt werden. Diese Flächen 3 sind vorzugsweise als Dreiecke ausgebildet. Es sind aber auch andere Flächen (Zellen) möglich, z. B. Quadrate, Fünf- oder Sechsecke und/oder eine Mischung aus diesen. Die zu einer Fläche 3 (Zelle) gehörenden Punkte 3 (Eckpunkte) sind entsprechend den topographischen Gegebenheiten so gewählt, daß von jedem Punkt die zugehörige Fläche oder Flächen, z. B. sechs Stück für einen Punkt, der in der Mitte des Punktrasters liegt, nach optischen Sichtbedingungen (bei klarem Wetter) lückenlos und im wesentlichen abschattungsfrei überwacht werden kann. Die Punkte 2 können z. B. auf einem Hügel, einem Trägermast, einem Gebäude und/oder - bei ebenem Gelände - z. B. unmittelbar neben der zu überwachenden Start-/Landebahn oder dem Kanal- oder Autostraßensystem liegen.

An jedem der Punkte 2 wird nun eine Radaranlage, die auch Radarsensor genannt wird, angeordnet. Eine solche Radaranlage hat eine geringe Reichweite, die maximal bis zum nächstliegenden Punkt reicht, was nachfolgend noch näher erläutert wird. Solche Radaranlagen enthalten z. B. eine schnell rotierende, z. B. mit 60 Upm (Umdrehungen pro Minute), Sende-/Empfangsantenne, die als Reflektorantenne ausgebildet ist und einen maximalen Durchmesser von ungefähr 0,5 m besitzt. Eine solche Antenne wird vorteilhafterweise durch einen Radom geschützt. Für die Radaranlagen wird vorzugsweise ein CW-Bereich (Continous-Wave-Betrieb, Dauerstrich-Betrieb) mit einer daran angepaßten Modulation, gewählt. Die Radaranlagen arbeiten vorzugsweise im MMW-Bereich (Millimeterwellenbereich) und besitzen eine Sendeleistung, die vorzugsweise im Bereich von 50 mW bis 500 mW liegt. Solche Sendeanlagen sind kostengünstig in zuverlässiger Halbleiter-Technologie herstellbar.

Diese Vielzahl der Radaranlagen wird gesteuert und/oder überwacht von einer Zentrale, die weit entfernt, z. B. einige Kilometer, von dem zu überwachenden Gebiet liegen kann. Durch eine solche Zentrale können in kostengünstiger Weise auch gleichzeitig mehrere solcher Gebiete überwacht werden. Die zwischen der Zentrale und den einzelnen Radaranlagen nötige (Daten-)Kommunikation erfolgt über dafür geeignete (Daten-)Übertragungsstrecken, z. B. elektrische Kabel, Lichtwellenleiter und/oder Funkstrecken, die vorzugsweise ebenfalls im Millimeterwellen-Bereich arbeiten. Von der Zentrale aus wird z. B. der Umlauf der Radarantennen und/oder die ausgestrahlten Millimeterwellen so synchronisiert, daß innerhalb einer Fläche 3 (Zelle) eine gemeinsame Signalverarbeitung der von der Radarantenne empfangenen Signale erfolgen kann. In der Zentrale befindet sich außerdem eine Auswerteeinheit, die vorzugsweise eine digital arbeitende Rechenanlage enthält, für die von den Radaranlagen empfangenen Signale. Diese können je nach dem erforderlichen Bedarf in vielfältiger Weise ausgewertet werden. Beispielsweise ist die Auswertung der Empfangssignale einer einzelnen Radaranlage und/oder der zu einer Fläche 3 (Zelle) gehörenden Radaranlagen und/oder der zu ausgewählten Flächen gehörenden Radaranlagen und/oder allen Radaranlagen möglich. Auf diese Weise sind z. B. (Radar-)Bilder mit unterschiedlicher räumlicher Auflösung darstellbar.

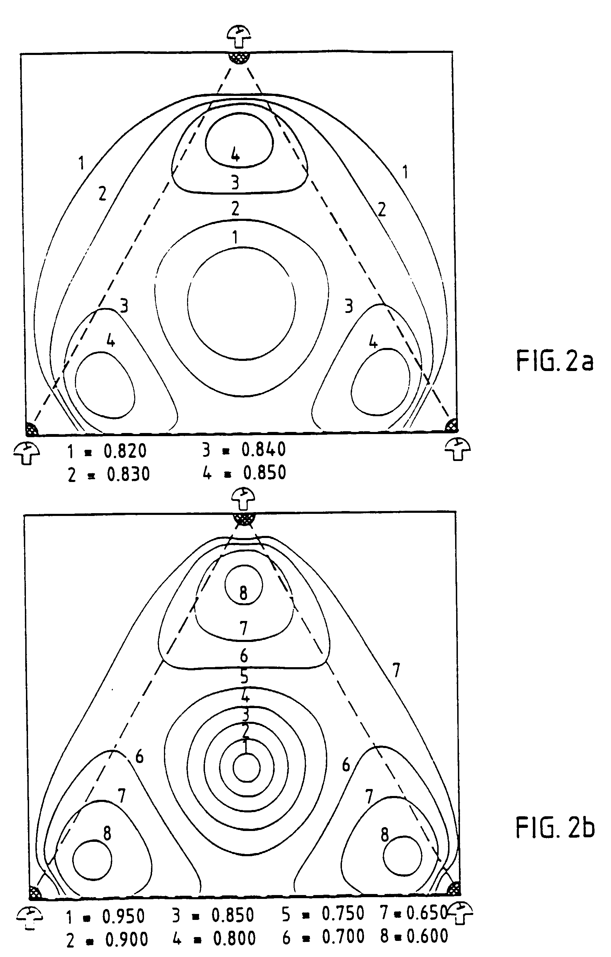

In den FIG. 2 bis 4 sind ausgewählte vorteilhafte Detektionseigenschaften für eine Fläche 3 (Zelle), die als dreieckige Fläche ausgebildet ist, dargestellt. Dabei befinden sich die pilzförmig dargestellten Radaranlagen an den Eckpunkten eines Dreiecks, das auch Basiszelle genannt wird.

FIG. 2a zeigt für ein bewegtes oder unbewegtes Ziel Kurven konstanter Positionsgenauigkeit im Bereich der gestrichelt dargestellten Basiszellen. Dabei sind die angegebenen sogenannten CEP-Werte (circular error probability) normiert auf die Entfernungsmeßgenauigkeit der an den Eckpunkten befindlichen Radaranlagen. Es ist ersichtlich, daß die Positionsgenauigkeit in vorteilhafter Weise nahezu ortsunabhängig ist. Die sich aus den Kurven 1 bis 4 ergebenden Unterschiede sind in der praktischen Anwendung vernachlässigbar.

In FIG. 2b ist die zu der Darstellung entsprechend FIG. 2a gehörende Elliptizität (Achsenverhältnis) der Fehlerellipsen dargestellt. Es ist ersichtlich, daß lediglich in unmittelbarer Nähe (Kurven 8) der Radaranlagen eine möglicherweise ungenaue Positionsbestimmung eines Zieles vorhanden ist.

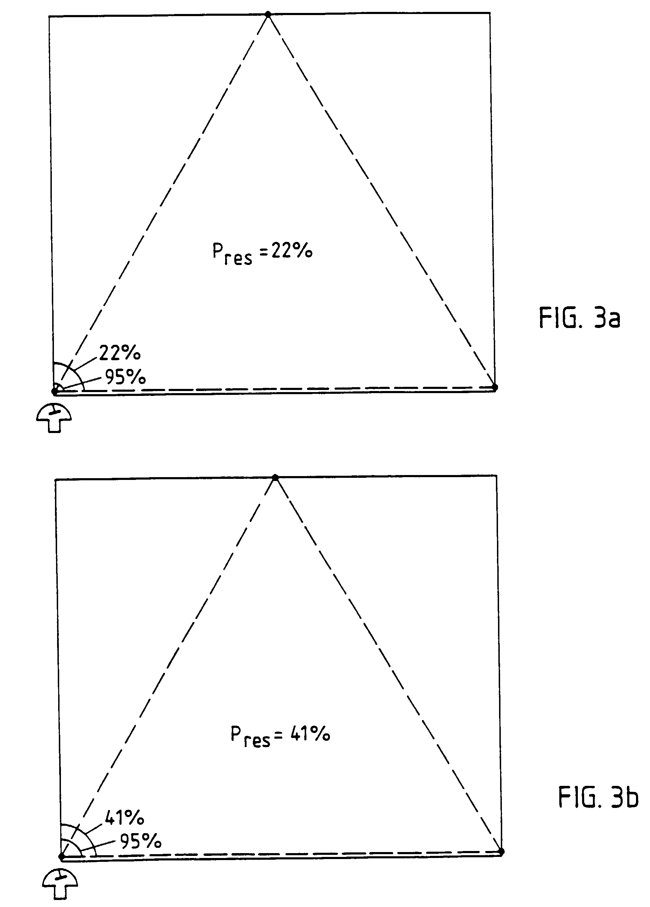

In den FIG. 3a, 3b ist die Auflösungswahrscheinlichkeit Pᵣₑₛ für eine einzelne Radaranlage dargestellt. Diese befindet sich an dem linken Eckpunkt der Basiszelle. Bei dieser betragen die Abstände der Eckpunkte ungefähr 1 km. Die (Einzel-)Radaranlagen besitzen jeweils eine Entfernungsauflösung von 2 m und eine Azimutauflösung von 2°.

FIG. 3a zeigt, daß ein Doppelziel, bei dem die zugehörigen Einzelziele einen Abstand d von nur 2,125 m besitzen, nahezu in der gesamten Basiszelle mit einer Auflösungswahrscheinlichkeit von Pᵣₑₛ = 22 % detektiert werden kann. Lediglich in unmittelbarer Nähe der Radaranlage ist eine höhere Auflösungswahrscheinlichkeit vorhanden. FIG. 3b zeigt eine der FIG. 3a entsprechende Darstellung, jedoch mit dem Unterschied, daß die Einzelziele einen Abstand d = 2,5 m besitzen. Es ist ersichtlich, daß in der Basiszelle die Auflösungswahrscheinlichkeit auf Pᵣₑₛ = 41 % gestiegen ist.

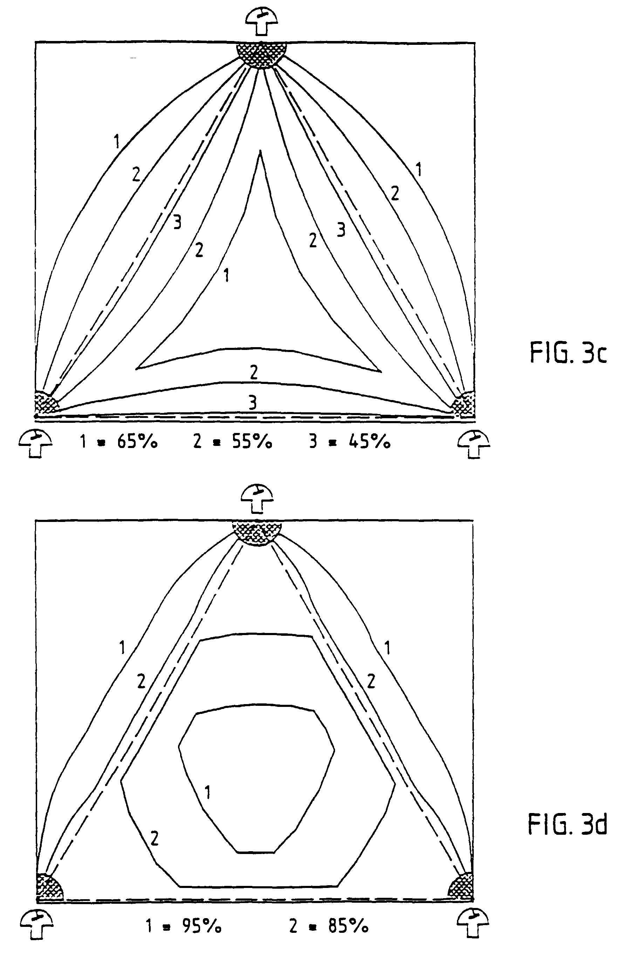

FIG. 3c zeigt eine Darstellung entsprechend FIG. 3a, jedoch mit dem Unterschied, daß an jedem Eckpunkt eine Radaranlage entsprechend FIG. 3a vorhanden ist. Bei dem aufzulösenden Doppelziel haben die Einzelziele einen Abstand von d = 2,125 m. Es ist ersichtlich, daß nun - im Gegensatz zu FIG. 3a - nahezu in der gesamten Basiszelle eine Auflösungswahrscheinlichkeit Pᵣₑₛ > 50 % vorhanden ist, d. h., das Doppelziel wird aufgelöst in die vorhandenen Einzelziele.

Bei der Darstellung gemäß FIG. 3d besteht das Doppelziel aus zwei Einzelzielen mit einem Abstand d = 2,5 m. Es ist ersichtlich, daß ein solches Ziel - im Gegensatz zu FIG. 3b - nun zuverlässig auflösbar ist (Pᵣₑₛ > 80 %).

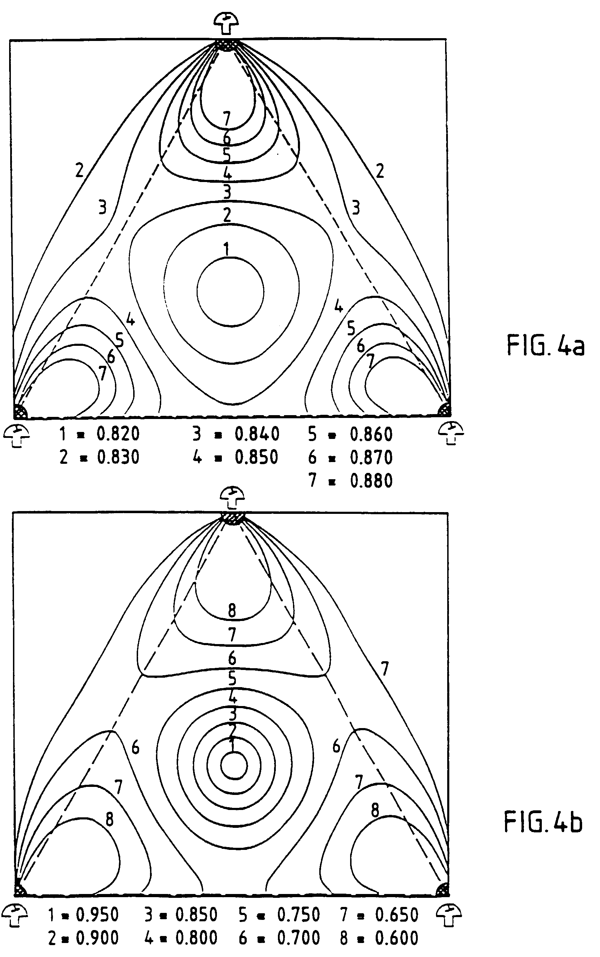

Die FIG. 4a, 4b zeigen die erreichbare Genauigkeit der Bestimmung eines Geschwindigkeitsvektors für ein Ziel innerhalb einer Basiszelle entsprechend den Darstellungen der FIG. 3c, 3d. FIG. 4a zeigt Kurven konstanter Genauigkeit des Geschwindigkeitsvektors im Bereich der Basiszelle. Dabei sind die verwendeten CEP-Angaben normiert auf die Dopplermeßgenauigkeit der an den Eckpunkten befindlichen Einzel-Radaranlagen. Es ist ersichtlich, daß der Geschwindigkeitsvektor mit einer Genauigkeit bestimmt werden kann, welche nahezu konstant ist innerhalb der Baiszellen.

FIG. 4b zeigt die zu FIG. 4a gehörende Elliptizität der Fehlerellipsen.

Die anhand der FIG. 1 beschriebene Aufteilung des zu überwachenden Gebietes in vorzugsweise dreieckförmige Basiszellen, deren Eigenschaften anhand der FIG. 2 bis 4 dargestellt wurden, ermöglicht eine Radarüberwachung mit weiteren vorteilhaften Eigenschaften:
- Eine lückenlose sowie verzugarme, d. h. nahezu verzerrungsfreie Bestimmung der Position und/oder Geschwindigkeit aller in dem Gebiet befindlichen kooperativen und/oder nicht kooperativen (Radar-)Ziele.
- Eine zuverlässige Klassifikation aller Ziele, da diese immer aus mindestens drei unterschiedlichen Richtungen betrachtet werden. Auf diese Weise können beispielsweise Ziele unterschieden werden, die in einer bestimmten Richtung gleiche oder ähnliche Rückstreueigenschaften besitzen.
- Verwendung zirkular polarisierter Millimeterwellen mit polarimetrischer Auswertung orthogonaler Empfangskanäle. Dadurch ist insbesondere störender Clutter, der durch Niederschläge verursacht wird, in zuverlässiger Weise unterdrückbar.
- Es ist eine Radarkarte (Clutter Map) des überwachten Gebiets mit vorgebbarer zeitlicher Erneuerung darstellbar.
- Ermittlung und Auswertung der Zielattribute, z. B. geometrische Strukturmerkmale, Ausdehnung, Polarisationsmerkmale eines Zieles.
- Zentrale Spurbildung eines oder mehrerer bewegter Ziele auf der Basis der Position(en), Geschwindigkeitsvektoren sowie der Zielattribute.
- Zuverlässige Vorhersage eventueller Kollisionskonflikte zwischen mehreren Verkehrsteilnehmern (bewegter Zielen).
- Es ist eine einfache Erweiterung des zu überwachenden Gebietes möglich, z. B. bei einer Verlängerung einer Start- und/oder Landebahn eines Flughafens, ohne daß die erwähnten Genauigkeiten der Positions- und/oder Geschwindigkeitsbestimmungen verringert werden. Bei einer Erweiterung müssen einem bestehenden System von Basiszellen lediglich eine dem neuen zugeführten Gebiet entsprechende Anzahl neuer Basiszellen hinzugefügt werden.
- Es ist eine systeminhärende Redundanz beim Ausfall einzelner Radaranlagen vorhanden. Denn dann wird beispielsweise aus einer dreieckförmigen Basiszelle eine sechseckförmige Fläche, in der auch weiterhin eine Detektion von Zielen möglich ist, aber möglicherweise mit verringerter Detektionswahrscheinlichkeit. Eine solche Eigenschaft wird auch "Graceful Degradation" genannt.

Die Erfindung ist nicht auf die beschriebenen Ausführungsbeispiele beschränkt, sondern in vielfältiger Weise auf weitere anwendbar. Beispielsweise ist eine zuverlässige Überwachung einer Landesgrenze bei schwieriger Topographie, z. B. im Gebirge, möglich. Weiterhin ist eine zuverlässige Überwachung von Häfen, Flußläufen, Meeresbuchten und/oder Meerengen möglich.

## Patentansprüche

1. Verfahren zur Überwachung eines Gebietes, in dem mindestens ein nichtkooperatives Ziel vorhanden ist, mit Hilfe einer Radaranlage, bei dem
- dem zu überwachenden Gebiet ein Punktraster überlagert wird;
- an jedem Punkt des Punktrasters eine Radaranlage, die im CW-Betrieb arbeitet, angeordnet wird;
- die Lage der Punkte in Abhängigkeit von der Topographie des Gebietes gewählt wird;
dadurch gekennzeichnet,
- daß mindestens drei Punkte als Eckpunkte einer zugehörigen vieleckigen Fläche (Zelle) ausgebildet werden;
- daß zumindest die an den Eckpunkten der Fläche befindlichen Radaranlagen über eine Auswerteeinheit vernetzt werden und innerhalb einer Fläche eine gemeinsame Signalverarbeitung zur Detektion der von der Radarantennen empfangenen Signale erfolgt, und
- daß die Abstände der Punkte sowie die Betriebseigenschaften in Abhängigkeit von den auf der Fläche geforderten Detektionseigenschaften gewählt werden.

2. Verfahren nach Anspruch 1, dadurch gekennzeichnet, daß bei einer Fläche (Zelle) die Lage der Punkte so gewählt wird, daß zwischen diesen eine optische Sichtverbindung besteht und daß von jedem Punkt die zugehörige Fläche (Zelle) abschattungsfrei überwachbar wird.

3. Verfahren nach Anspruch 1 oder 2, dadurch gekennzeichnet,
- daß mindestens zwei Flächen (Zellen) lückenlos benachbart angeordnet werden,und eine gemeinsame Begrenzungslinie besitzen;
- daß mindestens ein Punkt als Eckpunkt beider Flächen ausgebildet wird und
- daß von der auf diesem Eckpunkt angeordneten Radaranlage die mindestens zwei Flächen (Zellen) überwacht werden.

4. Verfahren nach einem der vorherigen Ansprüche, dadurch gekennzeichnet, daß die auf den Punkten befindlichen Radaranlagen jeweils eine Reichweite besitzen, die maximal bis zu dem jeweils benachbarten Punkt reicht.

5. Verfahren nach einen der vorherigen Ansprüche, dadurch gekennzeichnet, daß die Reichweite einer Radaranlage im Bereich von 0,3 km bis 3 km liegt und daß die gewählte Reichweite in Abhängigkeit von der Entfernung der benachbarten Punkte gewählt wird.

6. Verfahren nach einem der vorherigen Ansprüche, dadurch gekennzeichnet,
- daß auf den Eckpunkten mindestens einer Flächer (Zelle) Radaranlagen mit CW-Modulation angeordnet werden,
- daß die Radaranlagen eine zirkular polarisierte Strahlung im Milimeterwellenbereich aussenden und
- daß eine polarimetrische Auswertung orthogonaler Empfangskanäle erfolgt.

7. Verfahren nach einem der vorherigen Ansprüche, dadurch gekennzeichnet, daß zumindest bei jeder Fläche (Zelle) die von an den zugehörigen Eckpunkten befindlichen Radaranlagen empfangenen Signale in einer zentralen Auswerteeinheit ausgewertet werden.

8. Verfahren nach einem der vorhergehenden Ansprüche, dadurch gekennzeichnet, daß in der Auswerteeinheit von den erfaßten Zielen zumindest deren Position und vektorielle Geschwindigkeit bestimmt und daß die Ziele klassifiziert werden.

## Claims

1. Method of monitoring a region in which at least one non-co-operative target is present, with the aid of a radar installation, in which
- a point grating is superimposed on the region to be monitored;
- a radar installation which operates in CW mode is arranged at each point of the point grating;
- the position of the points is selected in dependence on the topography of the region;
characterised thereby
- that at least three points are formed as corner points of an associated polygonal area (cell);
- that at least the radar installations located at the corner points of the area are networked by way of an evaluating unit and a common signal processing for detection of the signals received by the radar antennae is carried out within an area; and
- that the spacing of the points as well as the operating characteristics are selected in dependence on the detection characteristics required of the area.

2. Method according to claim 1, characterised thereby that the position of the points is so selected at an area (cell) that an optical sighting connection exists therebetween and that the associated area (cell) can be monitored from each point free of shading.

3. Method according to claim 1 or 2, characterised thereby
- that at least two areas (cells) are arranged to adjoin gaplessly and possess a common boundary line;
- that at least one point is formed as a corner point of two areas, and
- that the at least two areas (cells) are monitored by the radar installations arranged at this corner point.

4. Method according to one of the preceding claims, characterised thereby that the radar installations located at these points each have a coverage which reaches at most to the respectively adjacent point.

5. Method according to one of the preceding claims, characterised thereby that the coverage of a radar installation lies in the region of 0.3 kilometres to 3 kilometres and that the selected coverage is chosen in dependence on the distance of the adjacent points.

6. Method according to one of the preceding claims, characterised thereby
- that radar installations with CW modulation are arranged at the corner points of at least one area (cell),
- that the radar installations emit a circularly polarised radiation in the millimetre wave range, and
- that a polarimetric evaluation of orthogonal receiving channels is carried out.

7. Method according to one of the preceding claims, characterised thereby that at least at each area (cell) the signals received by radar installations located at the associated corner points are evaluated in a central evaluating unit.

8. Method according to one of the preceding claims, characterised thereby that in the evaluating unit at least the position and vectorial velocity of the detected targets are determined and that the targets are classified.

## Revendications

1. Procédé pour la surveillance d'une zone, dans laquelle se trouve au moins une cible non coopérative, à l'aide d'une installation radar, selon lequel
- on superpose à la zone à surveiller une matrice de points;
- on place à chaque point de cette matrice une installation radar fonctionnant en régime continu;
- on choisit l'emplacement des points en fonction de la topographie de la zone;
caractérisé en ce que
- on choisit au moins trois points pour constituer les angles d'une surface (cellule) polygonale correspondante;
- on interconnecte au moins les installations radar se trouvant aux angles de la surface en un réseau à travers une unité d'exploitation et on effectue, à l'intérieur d'une surface, un traitement de signaux commun en vue de la détection des signaux reçus des antennes radar, et
- on choisit les distances entre les points ainsi que les caractéristiques de fonctionnement en fonction des propriétés de détection requises sur la surface.

2. Procédé selon la revendication 1, caractérisé en ce que l'on choisit l'emplacement des points d'une surface (cellule), de manière qu'une vue directe existe entre eux et que, à partir de chaque point, la surface (cellule) coordonnée puisse être surveillée sans masquage ou occultation.

3. Procédé selon la revendication 1 ou 2, caractérisé en ce que
- on place au moins deux surfaces (cellules) l'une à côté de l'autre, sans lacunes, de manière qu'elles possèdent une ligne de délimitation commune;
- on utilise au moins un point comme un angle des deux surfaces; et
- on surveille les deux surfaces, ou un plus grand nombre de surfaces (cellules) au moyen de l'installation radar placée à cet angle.

4. Procédé selon une des revendications précédentes, caractérisé en ce que les installations radar se trouvant aux différents points, possèdent chacune une portée allant tout au plus jusqu'au point voisin.

5. Procédé selon une des revendications précédentes, caractérisé en ce que la portée d'une installation radar est de l'ordre de 0,3 km à 3 km et que l'on choisit la portée en fonction de l'espacement des points voisins.

6. Procédé selon une des revendications précédentes, caractérisé en ce que
- on place sur les angles d'au moins une surface (cellule) des installations radar à modulation en régime continu;
- les installations radar émettent un rayonnement à polarisation circulaire dans la gamme millimétrique; et
- on effectue une exploitation polarimétrique de canaux de réception orthogonaux.

7. Procédé selon une des revendications précédentes, caractérisé en ce que, au moins pour chaque surface (cellule), on exploite dans une unité centrale d'exploitation les signaux reçus des installations radar se trouvant aux angles de la surface.

8. Procédé selon une des revendications précédentes, caractérisé en ce que l'on détermine dans l'unité d'exploitation au moins la position et la vitesse vectorielle des cibles détectées et que l'on classe les cibles.
